# EUROPEAN PATENT APPLICATION

(11) **EP 2 278 641 A1**
(43) Date of publication of application: **26.01.2011**
(21) Application number: 09750384.1
(22) Date of filing: 21.05.2009
(51) Int. Cl.: H01M 2/30, H01M 2/22, H01M 2/26

(54) **POWER SUPPLY DEVICE AND MANUFACTURING METHOD THEREOF**

(30) Priority: 21.05.2008 JP 2008133358
(71) Applicant: Toyota Jidosha Kabushiki Kaisha, Toyota-shi, Aichi 471-8571 (JP)
(72) Inventor: TSUCHIYA, Takenori, Toyota-shi Aichi 471-8571 (JP); NAGAI, Hiroki, Toyota-shi Aichi 471-8571 (JP); HIKOSAKA, Masahide, Toyota-shi Aichi 471-8571 (JP)
(74) Representative: TBK-Patent
(86) International application number: PCT/JP2009/002249
(87) International publication number: WO 2009/142022

(57) **Abstract**

[PROBLEMS] To provide a technology capable of maintaining the connection strength at a swaging connection point of a terminal unit in a power source apparatus and improving the weldability.

[SOLVING MEANS] A power source apparatus includes a case 92 housing a power generating element therein and having a hole portion 93h formed therein, the hole portion communicating from the exterior to the interior, an external electrode terminal 94 provided near the hole portion 93h outside the case 92, and an internal terminal 9a having one end electrically connected to a battery element 91 housed in the case 92 and the other end protruded to the outside of the case 92 through the hole portion 93h and subjected to swaging, the other end fixing the external electrode terminal 94 to the case 92, wherein the other end of the internal terminal 9a subjected to the swaging has a region of a smaller thickness in a direction parallel with a central axis direction of the hole portion 93h than at a position abutting on an edge portion of the hole portion 93h.

## Description

### [TECHNICAL FIELD]

The present invention relates to a power source apparatus for a secondary battery or the like, and more particularly, to riveted connection of a battery terminal.

### [BACKGROUND ART]

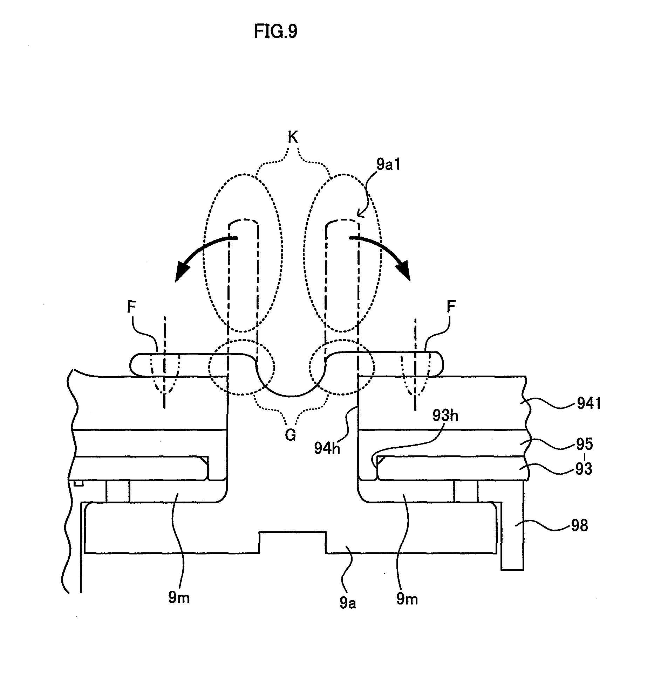

Fig. 9 is a section view showing a configuration around an electrode terminal in a conventional power source apparatus.

In a conventionally known configuration in a power source apparatus for use in an electric vehicle, hybrid vehicle and the like, one end of an internal terminal 9a formed of a conductive member is electrically connected to a battery element through a housing 93 forming part of a casing for accommodating the battery element, the other end formed in tubular shape is protruded to the outside through an insulator 98, the housing 93, an insulator 95, an electrode plate portion 941 and the like, and the other end is subjected to swaging to rivet the insulator 98, the insulator 95, and the electrode plate portion 941 to the housing 93. The electrode plate portion 941 forms part of an external electrode terminal.

The electrode plate portion 941 and the internal terminal 9a are electrically connected to each other by swaging such as riveting through the housing 3 and welding.

A cylindrical rivet 9al is provided to protrude at the end portion (the other end) of the internal terminal 9a. The housing 93 and the electrode plate portion 941 are provided with rivet holes 93h and 94h, respectively, for inserting the rivet 9a1 of the internal terminal 9a thereinto. The insulator 95 is placed between the electrode plate portion 941 and the housing 93. The insulator 98 and an insulating gasket 9m are placed between the internal terminal 9a and the housing 93. The insulators 95 and 98 have rivet holes (for example, a rivet hole 95h) formed thereon for inserting the rivet 9a1 thereinto. In this manner, the electrode plate portion 941 and the internal terminal 9a are electrically insulated from the housing 93.

The rivet 9a1 provided for the internal terminal 9a has a rivet umbrella K formed in cylindrical shape at an end portion thereof. The rivet umbrella K is subjected to swaging to be pressure-welded to the electrode plate portion 941. The swaging narrows the electrode plate portion 941 and a collar portion G of the rivet 9a1 to swage and connect the electrode plate portion 941 and the internal terminal 9a to the housing 93.

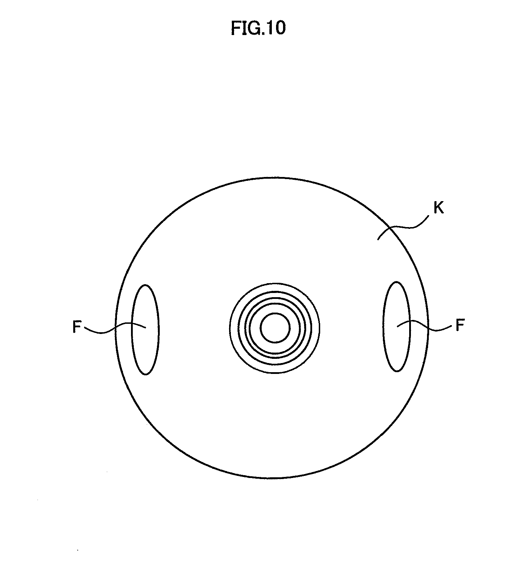

In the abovementioned configuration, to improve the strength of the swaging connection and reduce the electrical resistance between the electrode plate portion 941 and the internal terminal 9a1, the rivet umbrella K and the electrode plate portion 941 are welded together by laser from the direction of the top face of the rivet umbrella K. Fig. 10 is a diagram showing the rivet umbrella K viewed from the top face after the swaging and the welding are performed (see welding parts F) . It is seen from Figs. 9 and 10 that the welding has been performed in portions near the outer edge portion of the rivet umbrella K.

The technology for welding the rivet umbrella to the electrode plate portion in this manner is used in order to reduce the electric resistance and to improve the strength of the riveted connection as described in Patent Document 1.
[Patent Document 1] Japanese Patent Laid-Open No. 2004-14173 (Paragraph 0020, Fig. 2 and the like)

### [DISCLOSURE OF THE INVENTION]

### [PROBLEMS TO BE SOLVED BY THE INVENTION]

The technology described in Patent Document 1, however, is not an approach to melt the external electrode terminal and the rivet umbrella for junction and is not sufficient in terms of the reduction of the electrical resistance and the improvement in the joint strength. Thus, as shown in Fig. 9, it is necessary to perform the welding in which the electrode plate portion 941 and the riveted umbrella K are melted.

In the welding performed by melting the electrode plate portion 941 and the riveted umbrella K in this manner, however, the welding point is at a relatively high temperature. In addition, since the amount of heat necessary for the welding depends on the thickness of the rivet umbrella K, the temperature at the welding of the welding point also depends on that thickness. If the thickness of the rivet umbrella K is reduced for easier welding, the resulting riveted connection cannot achieve sufficient strength. On the other hand, if the thickness of the rivet umbrella K is increased for improving the strength of the riveted connection, the penetration of the welding is reduced to cause the problem of reduced stability in the penetration and the welding area. If the amount of heat at the welding is increased for maintaining the penetration in the welding, thermal deformation or the like may occur in another member near the welding point.

To address this, it is an obj ect of the present invention to provide a technology capable of maintaining the connection strength at a swaging connection point of a terminal unit in a power source apparatus and improving the weldability.

### [MEANS FOR SOLVING THE PROBLEMS]

In order to solve the problems described above, a power source apparatus according to an embodiment of the present invention comprises: a case housing a power generating element therein and having a hole portion formed therein, the hole portion communicating from the exterior to the interior; an electrode terminal provided near the hole portion outside the case; and an electrode member having one end electrically connected to a power generating element housed in the case and the other end protruded to the outside of the case through the hole portion and subjected to swaging, the other end fixing the electrode terminal to the case, wherein the other end of the electrode member subjected to the swaging has a region of a smaller thickness in a direction parallel with a central axis direction of the hole portion than at a position abutting on an edge portion of the hole portion.

In the power source apparatus having a structure described above, the other end of the electrode member is welded to the electrode terminal, and the region of the smaller thickness in the other end of the electrode member is a region subjected to welding.

In the power source apparatus having a structure described above, the other end of the electrode member is formed to have an inclined surface shape in which a thickness in the direction in parallel with the central axis direction of the hole portion is reduced from the position abutting on the edge portion of the hole portion toward a position further from the edge portion of the hole portion.

In the power source apparatus having a structure described above, the other end of the electrode member is set such that a thickness in the direction in parallel with the central axis direction of the hole portion is reduced in stages from the position abutting on the edge portion of the hole portion toward a position further from the edge portion of the hole portion.

A method of manufacturing a power source apparatus according to an embodiment of the present invention, the power source apparatus comprising a case housing a power generating element therein and having a hole portion formed therein, the hole portion communicating from the exterior to the interior, an electrode terminal provided near the hole portion outside the case, and an electrode member electrically connecting the power generating element and the electrode terminal through the hole portion, the method comprises: electrically connecting one end of the electrode member to the power generating element housed in the case; fixing the electrode terminal to the case by the other end protruded to the outside of the case through the hole portion and subjected to swaging; and welding the other end of the electrode member subjected to the swaging to the electrode terminal, wherein the other end of the electrode member subjected to the swaging has a region subjected to the welding to the electrode terminal, the region having a smaller thickness in a direction parallel with a central axis direction of the hole portion than at a position abutting on an edge portion of the hole portion.

### [EFFECT OF THE INVENTION]

According to the present invention, it is possible to provide the technology capable of maintaining the connection strength at the swaging connection point of the terminal unit in the power source apparatus and improving the weldability.

### [BEST MODE FOR CARRYING OUT THE INVENTION]

Embodiments of the present invention will hereinafter be described.

### [First Embodiment]

A power source apparatus and a manufacture method thereof according to first Embodiment of the present invention will be described.

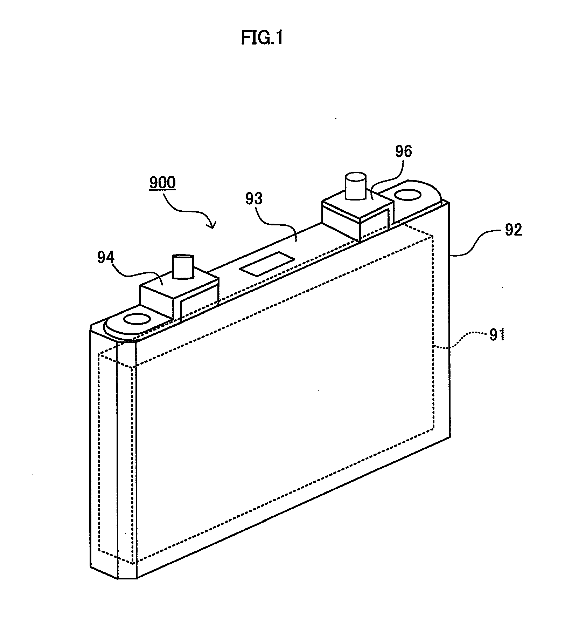

Fig. 1 is a perspective view showing the outer appearance of a battery cell (power source apparatus) 900 according to first Embodiment of the present invention. A plurality of battery cells 900 are combined to constitute an assembled battery which is mounted as a power source apparatus for an electric vehicle or a hybrid vehicle.

The battery cell 900 is an example illustrating a battery cell of a lithium-ion battery, and includes a case 92 having internal space formed therein for accommodating a battery element (power generating element) 91 and a housing 93 provided with an external electrode terminal 94 (positive electrode) and an external electrode terminal 96 (negative electrode). The external electrode terminal 94 and the external electrode terminal 96 are placed at positions spaced from each other on the housing 93.

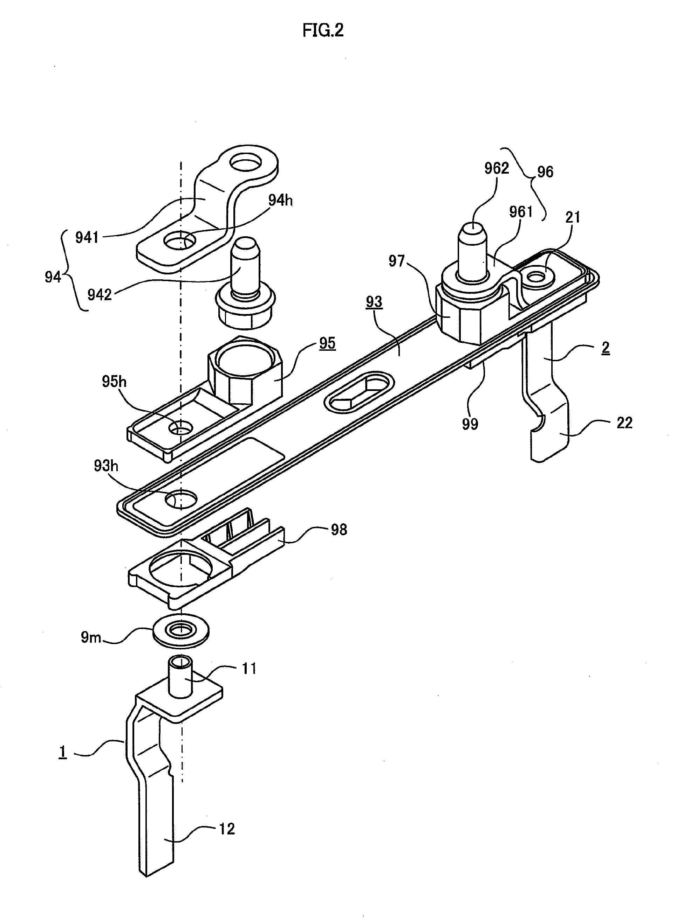

Fig. 2 is an exploded perspective view showing a battery terminal unit including the external electrode terminals 94 and 96 provided for the housing 93. As shown in Fig. 2, the battery terminal unit includes the external electrode terminal 94, the external electrode terminal 96, the housing 93, an internal terminal (electrode member) 1, and an internal terminal (electrode member) 2. The internal terminal (electrode member) 1 has one end 12 electrically connected to a positive electrode side of the battery element 91 inside the case 92 and the other end connected to the external electrode terminal 94 through the housing 93. The internal terminal (electrode member) 2 has one end 22 electrically connected to a negative electrode side of the battery element 91 inside the case 92 and the other end connected to the external electrode terminal 96 through the housing 93. The external electrode terminal and the internal terminal are electrically connected to each other by swaging such as riveting through the housing 3 and welding.

While the swaging in this case includes swaging with punching press and rotary swaging, the present invention is not limited thereto and any method can be used as long as the riveted connection can be realized as a result.

Cylindrical rivets 11 and 21 are provided to protrude on the end portions (the other ends) of the internal terminals 1 and2, respectively. The housing 93, an electrode plate portion 941, and an electrode plate portion 961 are provided with rivet holes 93h (corresponding to a hole portion communicating from the exterior of the case to the interior in which the battery element is accommodated), 94h, and96h, respectively, for inserting the rivets of the internal terminals thereinto. Insulators 95 and 97 are placed between the electrode plate portions 941 and 961 and the housing 93, respectively. Insulating gaskets 9m and insulators 98 and 99 are placed between the internal terminals 1 and 2 and the housing 93, respectively. Rivet holes (for example, a rivet hole 95h) for inserting the rivets thereinto are formed in the insulating gaskets 9m, the insulators 95, 97, 98, and 99. The electrode plate portion 941 and the electrode plate portion 961 are provided near the hole portions 93h outside the case 92.

In this manner, the external electrode terminals 94 and 96, and the internal terminals 1 and 2 are electrically insulated from the housing 93.

The following description is made of the side of the positive electrode terminal as a representative for convenience of description. On the side of the negative electrode terminal, the same configuration as that on the side of the positive electrode terminal is used in the present embodiment.

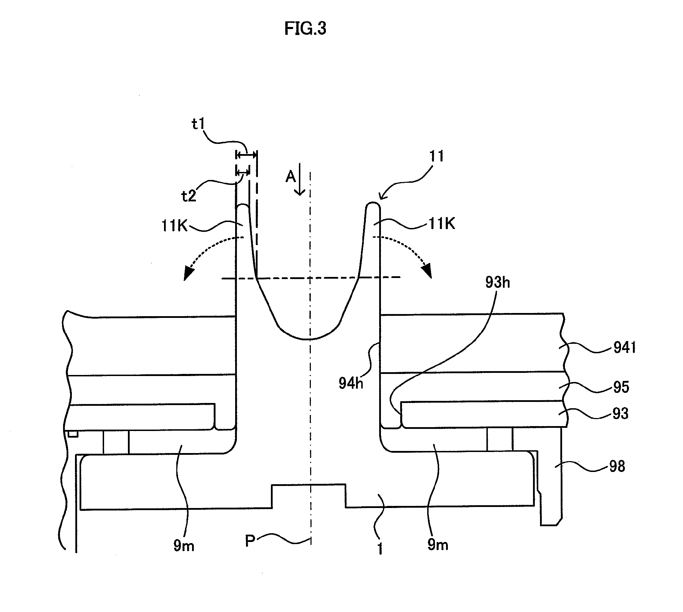

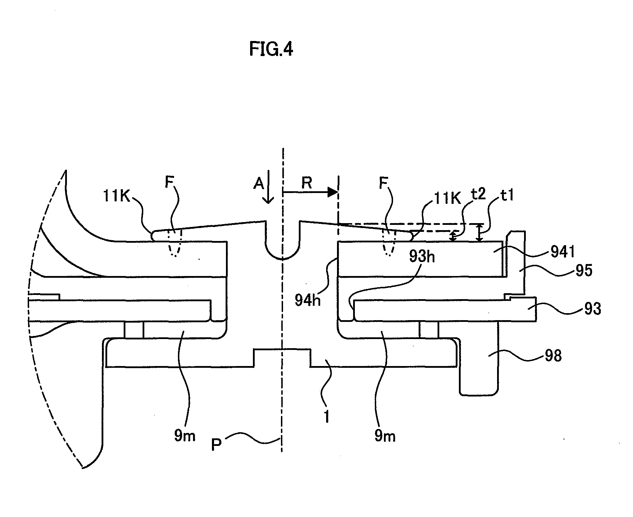

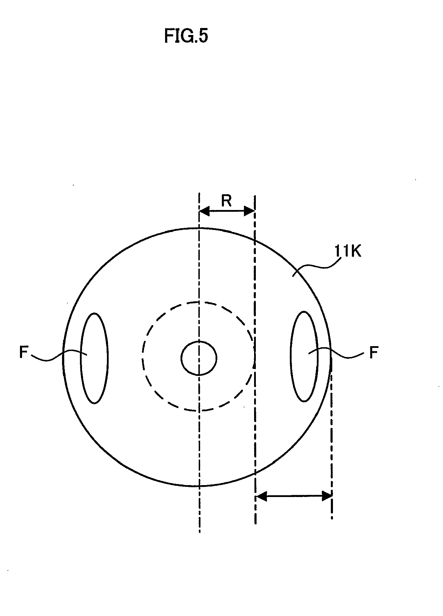

Fig. 3 is a diagram showing a sectional structure near the rivet 11 of the internal terminal 1 before the swaging is performed. Fig. 4 is a diagram showing the sectional structure near the rivet 11 of the internal terminal 1 in the state in which the swaging and welding have been performed. Fig. 5 is a diagram near the rivet 11 of the internal terminal 1 viewed in a direction A in Fig. 4 in the state in which the swaging and welding have been performed.

The rivet 11 provided at the other end of the internal terminal 1 has a rivet umbrella 11K formed in cylindrical shape at an end position thereof. The external electrode terminal 94 is formed of the electrode plate portion 941 and a terminal protruding portion 942. The rivet umbrella 11K is subjected to the swaging to be pressure-welded to the electrode plate portion 941. The swaging results in swaging connection of the electrode plate portion 941 and the internal terminal 1 to the housing 93.

As shown in Fig. 3 and Fig. 4, the rivet umbrella 11K of the rivet 11 provided at the other end of the internal terminal 1 in the present embodiment has a region of a smaller thickness in a direction in parallel with a central axis P of the rivet hole 94h (hole portion) than at a position (position separate from the central axis P by a distance R shown in Fig. 4) abutting on an edge portion of the rivet hole 94h in the state in which the swaging has been performed (see Fig. 4). The position of the rivet umbrella 11K that abuts on the edge portion of the rivet hole 94h in the state in which the swaging has been performed corresponds to the position at which there is a high possibility that the largest shearing stress may be applied to the rivet umbrella 11K in the state in which the swaging has been performed.

Specifically, the thickness of the rivet umbrella 11K at the position abutting on the edge portion of the rivet hole 94h (hole portion) is t1 and the thickness of the rivet umbrella 11K near a welding part F subjected to welding is t2 which is smaller than t1.

In the present embodiment, the rivet umbrella 11K of the rivet 11 in the internal terminal 1 is formed to have an inclined surface shape in which the thickness in the direction in parallel with the central axis P of the rivet hole 94h is reduced from the position abutting on the edge portion of the rivet hole 94h toward the position further from the edge portion of the hole portion.

In this manner, in the state in which the riveting has been performed by the rivet 11 in the internal terminal 1, the rivet umbrella has the sufficient thickness (t1) at the part where shear fracture is likely to occur due to load and the rivet umbrella has the thickness t2 smaller than the thickness t1 at the welding part F subjected to the welding. This can maintain the connection strength at the point of swaging connection performed by the rivet at the other end of the internal terminal and can improve the weldability between the rivet umbrella and the electrode plate portion.

### (Second Embodiment)

Next, second embodiment of the present invention will be described.

Second embodiment of the present invention is a variation of first embodiment described above. In the following, constituent components having the same functions as those of the portions already described in first embodiment are designated with the same reference numerals and description thereof is omitted. The present embodiment differs from first embodiment in the shape of the rivet umbrella of the rivet provided at the other end of the internal terminal.

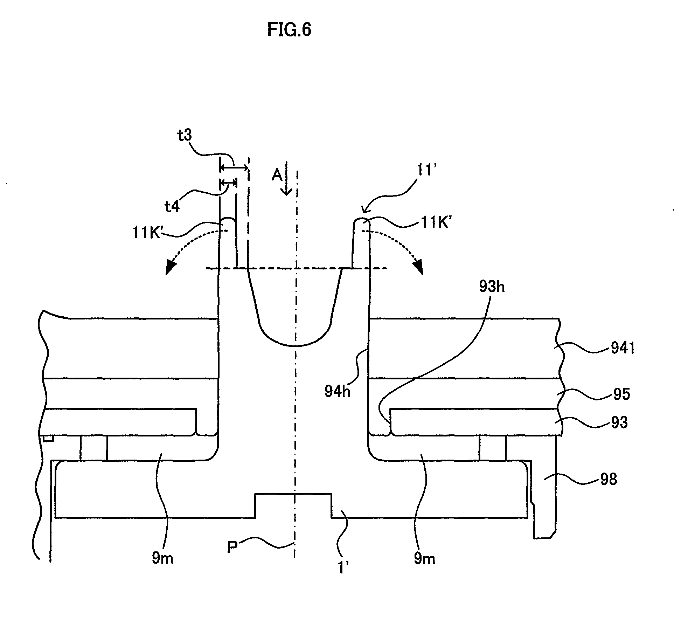

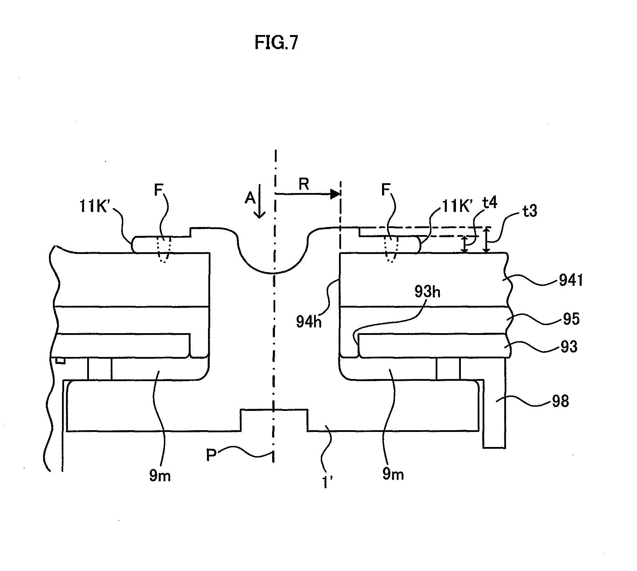

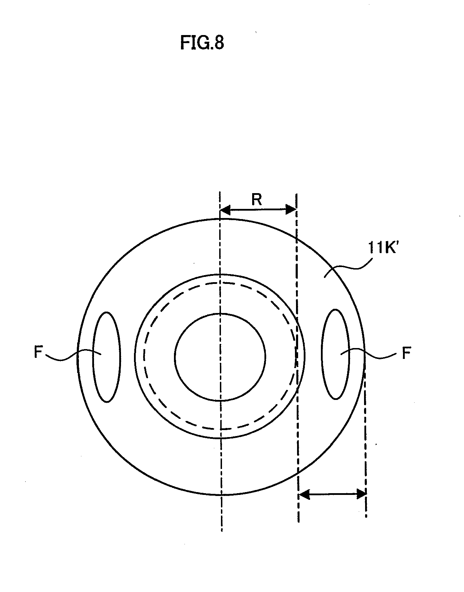

Fig. 6 is a diagram showing a sectional structure near a rivet 11' of an internal terminal 1' before swaging is performed. Fig. 7 is a diagram showing the sectional structure near the rivet 11' of the internal terminal 1' in the state in which the swaging and welding have been performed. Fig. 8 is a diagram near the rivet 11' of the internal terminal 1' viewed in a direction A in Fig. 6 in the state in which the swaging and welding have been performed.

As shown in Fig. 7 and Fig. 8, a rivet umbrella 11K' of the rivet 11' provided at the other end of the internal terminal 1' in the present embodiment has a region of a smaller thickness in a direction in parallel with a central axis P of a rivet hole 94h (hole portion) than at a position (position separate from the central axis P by a distance R shown in Fig. 7) abutting on an edge portion of the rivet hole 94h in the state in which the swaging has been performed (see Fig. 4). The position of the rivet umbrella 11K' that abuts on the edge portion of the rivet hole 94h in the state in which the swaging has been performed corresponds to the position at which there is a high possibility that the largest shearing stress may be applied to the rivet umbrella 11K' in the state in which the swaging has been performed.

Specifically, the thickness of the rivet umbrella 11K' at the position abutting on the edge portion of the rivet hole 94h (hole portion) is t3 and the thickness of the rivet umbrella 11K' near a welding part F subjected to welding is t4 which is smaller than t3.

In the present embodiment, the rivet umbrella 11K' of the rivet 11' in the internal terminal 1' is formed such that the thickness in the direction in parallel with the central axis P of the rivet hole 94h is reduced in stages (stepwise) from the position abutting on the edge portion of the rivet hole 94h (hole portion) toward the position further from the edge portion of the rivet hole 94h.

In this manner, in the state in which the riveting has been performed by the rivet 11' in the internal terminal 1', the rivet umbrella has the sufficient thickness (t3) at the part where shear fracture is likely to occur due to load and the rivet umbrella has the thickness (t4) smaller than the thickness t3 at the welding part F subjected to the welding. This can maintain the connection strength at the point of swaging connection performed by the rivet at the other end of the internal terminal and can improve the weldability between the rivet umbrella and the electrode plate portion.

In this manner, according to respective embodiments described above, it is possible to provide a method of manufacturing a power source apparatus including a case housing a power generating element therein and having a hole portion formed therein, the hole portion communicating from the exterior to the interior, an electrode terminal provided near the hole portion outside the case, and an electrode member electrically connecting the power generating element and the electrode terminal through the hole portion, the method including electrically connecting one end of the electrode member to the power generating element housed in the case, fixing the electrode terminal to the case by the other end protruded to the outside of the case through the hole portion and subjected to swaging, and welding the other end of the electrode member subjected to the swaging to the electrode terminal, wherein the other end of the electrode member subjected to the swaging has a region subj ected to the welding to the electrode terminal, the region having a smaller thickness in a direction parallel with a central axis direction of the hole portion than at a position abutting on an edge portion of the hole portion.

For example when processing such as chamfering is performed in the edge portion of the hole portion, the position abutting on the edge portion of the hole portion at the other end of the electrode member may include at least part of the position abutting on the part subjected to the chamfering.

While respective embodiments described above have illustrated, as an example, the configuration in which the end portion of the electrode member subjected to the swaging is formed in cylindrical shape and is pressed and flared in umbrella form by the swaging, the present invention is not necessarily limited thereto. For example, it is possible to use the configuration in which the other end of the electrode member is formed in plate shape and is bent by swaging to fix the electrode terminal to the case. In this case, the other end of the electrode member formed in plate shape is formed such that the thickness of a part subjected to welding to the electrode terminal is smaller than the thickness of a base portion to be bent.

While respective embodiments described above have illustrated, as an example, the configuration in which the one end of the electrode member is directly connected to the power generating element, it is essential only that the one end of the electrode member and the power generating element may be electrically connected to each other as a result. It goes without saying that it is possible to use the configuration in which another conductive member is interposed between the one end of the electrode member and the power generating element, for example.

While respective embodiments described above have illustrated, as an example, the case where the welding of the rivet umbrella and the electrode plate portion is performed at the two points, the present invention is not necessarily limited thereto. It goes without saying that the welding can be performed at one, or three or more points as required.

Respective embodiments described above have shown the example in which the point of the welding of the rivet umbrella and the electrode plate portion is located closer to the base portion than the end of the rivet umbrella. However, welding may be performed such that the end position of the rivet umbrella is at the center of the welding area (such that the welding area extending from the end of the rivet umbrella to the electrode plate portion).

While respective embodiments have illustrated, as an example, the case where the rivet umbrella has the previously formed shape, the present invention is not necessarily limited thereto. For example, a rivet umbrella having a uniform thickness may be used for riveting to perform swaging and then additional processing may be performed, thereby providing the rivet umbrella having thickness distribution as shown in respective embodiments described above.

### [BRIEF DESCRIPTION OF DRAWINGS]

[Fig. 1] A perspective view showing the outer appearance of a battery cell (power source apparatus) 900 according to first Embodiment of the present invention.
[Fig. 2] An exploded perspective view showing a battery terminal unit including external electrode terminals 94 and 96 provided for a housing 93.
[Fig. 3] A diagram showing a sectional structure near a rivet 11 of an internal terminal 1 before swaging is performed.
[Fig. 4] A diagram showing the sectional structure near the rivet 11 of the internal terminal 1 in the state in which the swaging and welding have been performed.
[Fig. 5] A diagram near the rivet 11 of the internal terminal 1 viewed in a direction A in Fig. 4 in the state in which the swaging and welding have been performed.
[Fig. 6] A diagram showing a sectional structure near a rivet 11' of an internal terminal 1' before swaging is performed.
[Fig. 7] A diagram showing the sectional structure near the rivet 11' of the internal terminal 1' in the state in which the swaging and welding have been performed.
[Fig. 8] A diagram near the rivet 11' of the internal terminal 1' viewed in a direction A in Fig. 6 in the state in which the swaging and welding have been performed.
[Fig. 9] A section view showing a configuration around an electrode terminal in a conventional power source apparatus.
[Fig. 10] A diagram showing a rivet umbrella K viewed from the top face after swaging and welding are performed.

### [DESCRIPTION OF REFERENCE NUMERAL]

900: battery cell (power source apparatus)
91: battery element
92: case
93: housing
94: external electrode terminal
95, 97, 98, 99: insulator
96: external electrode terminal
9m: insulating gasket
1, 2, 1': internal terminal
11, 11': rivet
11K, 11K': rivet umbrella

## Claims

1. A power source apparatus comprising:
a case housing a power generating element therein and having a hole portion formed therein, the hole portion communicating from the exterior to the interior;
an electrode terminal provided near the hole portion outside the case; and
an electrode member having one end electrically connected to a power generating element housed in the case and the other end protruded to the outside of the case through the hole portion and subjected to swaging, the other end fixing the electrode terminal to the case,
wherein the other end of the electrode member subjected to the swaging has a region of a smaller thickness in a direction parallel with a central axis direction of the hole portion than at a position abutting on an edge portion of the hole portion.

2. The power source apparatus according to claim 1, wherein the other end of the electrode member is welded to the electrode terminal, and
wherein the region of the smaller thickness in the other end of the electrode member is a region subjected to welding.

3. The power source apparatus according to claim 1 or 2, wherein the other end of the electrode member is formed to have an inclined surface shape in which a thickness in the direction in parallel with the central axis direction of the hole portion is reduced from the position abutting on the edge portion of the hole portion toward a position further from the edge portion of the hole portion.

4. The power source apparatus according to claim 1 or 2, wherein the other end of the electrode member is set such that a thickness in the direction in parallel with the central axis direction of the hole portion is reduced in stages from the position abutting on the edge portion of the hole portion toward a position further from the edge portion of the hole portion.

5. A method of manufacturing a power source apparatus comprising a case housing a power generating element therein and having a hole portion formed therein, the hole portion communicating from the exterior to the interior, an electrode terminal provided near the hole portion outside the case, and an electrode member electrically connecting the power generating element and the electrode terminal through the hole portion, the method comprising:
electrically connecting one end of the electrode member to a power generating element housed in the case;
fixing the electrode terminal to the case by the other end protruded to the outside of the case through the hole portion and subjected to swaging; and
welding the other end of the electrode member subjected to the swaging to the electrode terminal,
wherein the other end of the electrode member subjected to the swaging has a region subjected to the welding to the electrode terminal, the region having a smaller thickness in a direction parallel with a central axis direction of the hole portion than at a position abutting on an edge portion of the hole portion.
